# EUROPEAN PATENT APPLICATION

(11) **EP 4 703 842 A1**
(43) Date of publication of application: **04.03.2026**
(21) Application number: 24795734.3
(22) Date of filing: 25.03.2024
(51) Int. Cl.: G06E 3/00

(54) **OPTIC-ELECTRIC COMPUTING SYSTEM AND DATA PROCESSING METHOD**

(30) Priority: 27.04.2023 CN 202310475992
(71) Applicant: Shanghai Xizhi Technology Co., Ltd., Shanghai 201203 (CN)
(72) Inventor: SHEN, Yichen, Shanghai 201203 (CN); MENG, Huaiyu, Shanghai 201203 (CN); MACDOWELL, William, Shanghai 201203 (CN)
(74) Representative: Herrmann, Daniel
(86) International application number: PCT/CN2024/083684
(87) International publication number: WO 2024/222351

(57) **Abstract**

Disclosed are an optoelectronic computing system and a data processing method. The optoelectronic computing system includes: a plurality of compute cores configured to execute instructions synchronously; an instruction decode and issue module configured to receive a first set of instructions from a data processor, decode the first set of instructions to generate a second set of instructions, and send the second set of instructions to the plurality of compute cores; and an optical broadcast network comprising a plurality of optical links, wherein the optical links are configured to transmit the second set of instructions from the instruction decode and issue module to each of the plurality of compute cores.

## Description

This application claims priority to Chinese Patent Application No. 202310475992.2 filed with CNIPA on April 27, 2023, and titled "OPTOELECTRONIC COMPUTING SYSTEMS AND DATA PROCESSING METHODS", which is incorporated herein by reference in its entirety.

### Technical Field

This disclosure relates to optoelectronic computing systems and data processing methods.

### Background

Computation performed on electronic data, which encodes electrical signals in analog or digital form, is typically implemented using electronic computing hardware, such as integrated circuits (e.g., processors, Application-Specific Integrated Circuits (ASICs), or Systems-on-Chip (SoCs)), electronic circuit boards, or other electronic circuits. The use of optical signals in computing systems is subject to many limitations.

### Technical Solutions

Embodiments of the present disclosure provide an optoelectronic computing system and a data processing method to address the limitations of the related art in the use of the optical signals in the computing systems.

In an exemplary implementations, an optoelectronic computing system is provided, including: a plurality of compute cores configured to execute instructions synchronously, where the plurality of compute cores include a first compute core and a second compute core;
an instruction decode and issue module configured to receive a first set of instructions from a data processor, decode the first set of instructions to generate a second set of instructions, and send the second set of instructions to the plurality of compute cores; and
an optical broadcast network including a plurality of optical links that are coupled between the instruction decode and issue module and the plurality of compute cores, where the optical links are configured to transmit the second set of instructions from the instruction decode and issue module to each of the plurality of compute cores.

In some implementations, the plurality of compute cores are electrically independent from one another, and each of the plurality of compute cores does not transmit electrical signals to another one of the plurality of compute cores.

In some implementations, the instruction decode and issue module is configured to issue a third set of instructions for performing a computation task to at least two of the plurality of compute cores, the plurality of compute cores are configured to execute the third set of instructions and collaboratively perform the computation task, the first compute core is configured to execute the third set of instructions and performs a first portion of the computation task to generate a first result, and the second compute core is configured to execute the third set of instructions and performs a second portion of the computation task to generate a second result.

In some implementations, the first compute core and the second compute core are synchronized in executing the instructions and performing the first and second portions of the computation task based on synchronization control information broadcast from the instruction decode and issue module.

In some implementations, the plurality of compute cores include at least 4 compute cores.

In some implementations, the optoelectronic computing system further includes a photonic integrated circuit chip, where the photonic integrated circuit chip includes the optical broadcast network.

In some implementations, the optoelectronic computing system further includes a substrate, where the plurality of compute cores and the instruction decode and issue module are provided on the substrate, where the plurality of optical links include optical waveguides that are provided on the substrate and optically coupled between the instruction decode and issue module and the plurality of compute cores.

In some implementations, the optoelectronic computing system further includes a computation module that employs a single instruction multiple data (SIMD) architecture, where the computation module includes the plurality of compute cores, the instruction decode and issue module, and the optical broadcast network.

In some implementations, the plurality of compute cores are configured to operate collaboratively to solve execution issues of artificial intelligence workloads.

In some implementations, the plurality of compute cores are configured to operate collaboratively for tensor processing, and each of the compute cores is configured to operate on a different part of a given tensor.

In another aspect of the present disclosure, a data processing method is provided, including:
receiving, by an instruction decode and issue module, a first set of instructions from a data processor, and decoding the first set of instructions to generate a second set of instructions;
transmitting the second set of instructions from the instruction decode and issue module to a plurality of compute cores through an optical broadcast network including a plurality of optical links, where the plurality of compute cores include a first compute core and a second compute core;
performing, by the first compute core, a first portion of a computation task to generate a first result; and
performing, by the second compute core, a second portion of the computation task to generate a second result.

In some implementations, the method further includes combining the first result and the second result to generate a final result.

In some implementations, the plurality of compute cores are electrically independent from one another, and each of the plurality of compute cores does not transmit electrical signals to another one of the plurality of compute cores.

In some implementations, the method further includes:
issuing, by the instruction decode and issue module, a third set of instructions for performing a computation task to the first compute core and the second compute core;
executing, by the first compute core and the second compute core, the third set of instructions to collaboratively perform the computation task, including:
executing, by the first compute core, the third set of instructions and the first portion of the computation task to generate the first result, and
executing, by the second compute core, the third set of instructions and the second portion of the computation task to generate the second result.

In some implementations, the method further includes:
broadcasting synchronization control information from the instruction decode and issue module to the first compute core and the second compute core through the optical broadcast network, enabling the first compute core and the second compute core to perform the first and second portions of the computation task synchronously.

In some implementations, the method further includes:
transmitting the second set of instructions from the instruction decode and issue module to at least 4 compute cores through the optical broadcast network, and utilizing the at least 4 compute cores to perform the computation task collaboratively.

The present invention provides a solution for the use of optical signals in optoelectronic computing systems. Through an instruction decode and issue module and an optical broadcast network, the plurality of compute cores can be synchronized in executing instructions. Furthermore, the multiple computing cores can be synchronized in executing different parts of a computation task. The technical solutions provided by the present invention not only improve system throughput but also allows for processing of more data, significantly improving the overall computational capacity of the computing system.

Aspects, features, advantages, and other aspects of the embodiments of the present invention will be specifically described below in conjunction with the accompanying drawings. Based on the following specific description in conjunction with the accompanying drawings, the aforementioned aspects, features, advantages, and the like of the present invention will become more apparent.

With reference to the following description and accompanying drawings, specific embodiments of the present disclosure are disclosed in detail, indicating the manner in which the principles of the present disclosure can be employed. It should be understood that the embodiments of the present disclosure are not limited in scope thereby. The embodiments of the present disclosure encompass numerous variations, modifications, and equivalents within the spirit and scope of the appended claims.

Features described and/or illustrated with respect to one embodiment may be used in the same or similar manner in one or more other embodiments, combined with features in other embodiments, or substituted for features in other embodiments.

It should be emphasized that the term "include/comprising" used herein refers to the presence of features, integers, steps, or components, but does not exclude the presence or addition of one or more other features, integers, steps or components.

### Brief Description of the Drawings

To more clearly explain the technical solutions in the embodiments of the present invention, the accompanying drawings required for the description of the embodiments will be briefly introduced below. It is obvious that the drawings in the following description are only some embodiments of the present invention, and for those of ordinary skill in the art, other drawings can be obtained from these drawings without creative effort.
FIG. 1 is a schematic diagram of an example of a computation module provided by some embodiments of the present invention.
FIG. 2 is a schematic diagram of an example of a connection between a computing system and a computer provided by some embodiments of the present invention.
FIG. 3 is a flow chart of an example of a data processing method provided by some embodiments of the present invention.

Like reference numbers and designations in the various drawings indicate like elements.

### Detailed Description of the Embodiments

The above description is only an overview of the technical solutions of the present invention. To understand the technical means of the present invention more clearly to implement these technical solutions according to the content of the specification, and to make the above and other objects, features, and advantages of the present invention more obvious and easier to understand, the preferred embodiments are described in detail below in conjunction with the accompanying drawings.

Unless otherwise defined, technical or scientific terms used in this disclosure shall have the ordinary meaning as understood by a person of ordinary skill in the art to which this disclosure belongs. The words "first," "second," and similar terms used in this disclosure do not denote any order, quantity, or importance, but are only used to distinguish different components.

In the following description of the embodiments of this disclosure, when the number of components or elements is not specified, it means that there may be one or more of the components or elements, or it can be understood as at least one. "At least one" means one or more, and "a plurality of" means at least two.

To make the objects, features, and advantages of the present invention more obvious and easier to understand, the present invention is further described in detail below in conjunction with the accompanying drawings and specific embodiments.

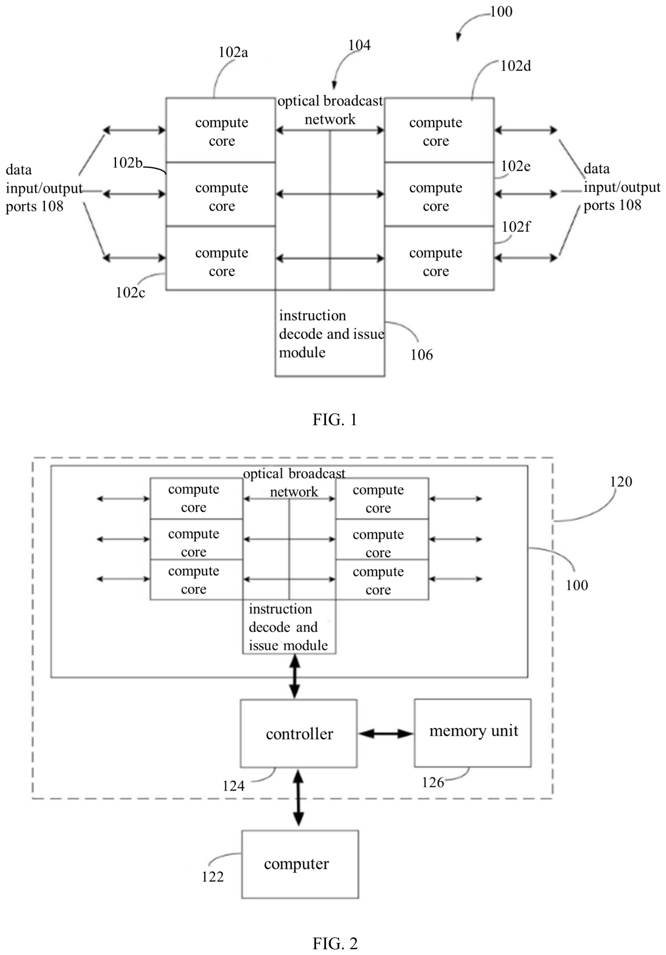

FIG. 1 shows a schematic diagram of an example of a computation module 100 provided by some embodiments of the present invention. The computation module may use a single instruction multiple data (SIMD) architecture. For example, the computation module 100 can be an artificial neural network (ANN) computation sub-system. An ANN is a collection of artificial neurons interconnected in a specific way to process information in a manner similar to how the brain operates. Typically, the ANN has an input layer, one or more hidden layers, and an output layer. The computation module 100 includes an instruction decode and issue module 106 and a plurality of compute cores, e.g., 102a, 102b, 102c, 102d, 102e, 102f (collectively referenced as 102). The instruction decode and issue module 106 communicates with the compute cores 102 through, e.g., an optical broadcast network 104. Although 6 compute cores 102 are shown in the figure, in actual use, the computation module 100 can have a larger number or a smaller number of compute cores 102. The optical broadcast network 104 can include waveguides. In some implementations, the computation module 100 includes a photonic integrated circuit chip, which includes the aforementioned optical broadcast network 104, and the photonic integrated circuit chip can be manufactured using semiconductor processes. In some implementations, the compute cores are electrically independent from each other and each of the compute cores does not transmit electrical signals to another one of the plurality of compute cores. The compute cores are logically connected, in which the compute cores work together to solve higher-level execution issues of an artificial intelligence workload. Computational results generated by the multiple computing cores performing different types of operations are transmitted through a data input/output ports 108. The embodiments of the present invention enables implementations of a system control architecture for the single instruction multiple data integrated circuit through the photonic broadcast between the compute cores.

For example, a computation task can involve processing tensors. Each compute core 102 can be configured to operate on a different part of a given tensor, in which the compute cores 102 execute synchronously (e.g., in lockstep) through the optical broadcast network between the compute cores 102. In a conventional single instruction multiple data architecture, compute cores can receive different parts of a task and operate on different parts of the task asynchronously with respect to the other compute cores and return some status back to a central control unit upon completion.

In some implementations, the computation module 100 does not adopt the level of asynchronization in the conventional single instruction multiple data architecture. Rather, the computation module 100 uses a unique control architecture that causes the compute cores 102 to execute synchronously (e.g., in lockstep), which enables the computation module 100 to have one or more advantages compared to a conventional computing system that uses the convention single instruction multiple data architecture, such as reduced power consumption, reduced device area footprint, and/or reduced device complexity.

The present invention provides a novel computer architecture, integrated circuit design, and system design that address a number of problems for artificial intelligence inference accelerators, and can provide one or more of the following advantages: power savings, area savings, complexity reducing in both the software and hardware domains, throughput improvement, and performance improvement compared to the conventional solution.

In some implementations, the computing system operates at a highest level of the single instruction multiple data but incorporates systolic-loop within the compute cores 102. This enables the computing system to statically allocate compute resources to each compute core when the instructions are issued by the instruction decode and issue module 106, thereby reducing chip area, device power consumption, device complexity, and/or computation latency. For example, instructions can be issued and retired out of order, with multiple instructions in-flight during a given time period. Because the computation module 100 can have multiple dynamic instructions in-flight in parallel, this delivers a higher throughput, e.g., allowing more data to be processed, as compared to the conventional SIMD architecture. This enables a computer system that incorporates the computation module 100 to achieve improved performance.

In some implementations, the computation module 100 can execute instructions from an instruction set architecture (ISA) that features explicitly-defined data dependencies from a compiler. This offers advantages in terms of area/complexity and determinism at the software level.

In some implementations, the computation module 100 implements a scheme to handle instruction-dependent pipelining by using SRAM as intermediate storage. This enables the computation module to achieve a high throughput.

FIG. 2 shows a schematic diagram of a connection between a computing system 120 and a computer 122 provided by some embodiments of the present invention, which may be an optoelectronic computing system. The computing system 120 includes a controller 124, a memory unit 126, and a single instruction multiple data (SIMD) computation module 100. The controller 124 is electrically coupled to the memory unit 126 and the SIMD computation module 100. The controller 124 is configured to receive a first set of instructions from the computer 122, decode the first set of instructions to generate a second set of instructions, and send the second set of instructions to the plurality of compute cores 102. The controller 124 includes integrated circuitry that is configured to control the operation of the computing system 120 to perform ANN computations.

In some examples, the instruction decode and issue module 106 is configured to issue a third set of instructions for performing a computation task to at least two of the plurality of compute cores 102. The plurality of compute cores 102 are configured to execute the third set of instructions and collaboratively perform the computation task. For example, the first compute core 102a is configured to execute the third set of instructions and perform a first portion of the computation task to generate a first result, the second compute core 102b is configured to execute the third set of instructions and performs a second portion of the computation task to generate a second result.

In some implementations, the instruction decode and issue module 106 is configured to broadcast synchronization control information to the plurality of compute cores 102 through the optical broadcast network 104, thereby enabling the plurality of compute cores 102 to execute the instructions synchronously to perform the corresponding portions of the computation task. For example, the instruction decode and issue module 106 broadcasts the synchronization control information to the first compute core 102a and the second compute core 102b through the optical broadcast network 104 to enable the first compute core 102a and the second compute core 102b to be synchronized in executing the third set of instructions to respectively perform the first portion and the second portion of the computation task.

In some implementations, the plurality of compute cores 102 and the instruction decode and issue module 106 are provided on a substrate (not shown in the figure), in which the optical broadcast network 104 includes optical waveguides that are provided on the substrate and coupled between the instruction decode and issue module 106 and the compute cores 102.

The integrated circuitry of the controller 124 can be an application specific integrated circuit specifically configured to perform the steps of an ANN computation process. For example, the integrated circuitry can implement a microcode or a firmware specific to performing the ANN computation process. As such, the controller 124 can have a reduced set of instructions relative to a general purpose processor used in conventional computers, such as the computer 122. In some implementations, the integrated circuitry of the controller 124 can include two or more circuitries configured to perform different steps of the ANN computation process.

In an example operation of the computing system 120 connected to the computer 122, the computer 122 can issue an artificial neural network computation request to the computing system 120. The ANN computation request can include neural network weights that define an ANN, and an input dataset including tensors to be processed by the provided ANN. The controller 124 receives the ANN computation request, and stores the input dataset and one or more neural network weights in the memory unit 126.

For example, the input dataset corresponds to various digital information to be processed by the ANN. Examples of the input dataset include, e.g., video files, image files, audio files, LiDAR point cloud, or Global Position System (GPS) coordinates sequences. The input dataset can be related to a wide range of applications, e.g., healthcare research data, medical research data, simulation data, data related to autonomous driving, data related to operation of robots, data for supporting meta-verses, data for supporting online gaming, and data for supporting social media. Below the operation of the computing system 120 is described based on receiving an image file as the input dataset. In general, the size of the input dataset can vary from hundreds of data points to millions of data points or larger. For example, a digital image file with a resolution of 1 megapixel has approximately one million pixels, and each of the one million pixels can be a data point to be processed by the ANN. Due to the large number of data points in a typical input dataset, the input dataset can be divided into multiple digital input vectors of smaller size to be individually processed by the compute cores 102. As an example, for a greyscale digital image, the elements of the digital input vectors can be 8-bit values representing the intensity of the image, and the digital input vectors can have a length that ranges from 10's of elements (e.g., 32 elements, 64 elements) to hundreds of elements (e.g., 256 elements, 512 elements). In general, an input dataset of arbitrary size can be divided into digital input vectors of a size suitable for processing by the compute cores 102. In cases where the number of elements of the input dataset is not divisible by the length of the digital input vector, zero padding can be used to fill out the data set to be divisible by the length of the digital input vector. Outputs from the individual digital input vectors can be processed to reconstruct a complete output that is a result of processing the input dataset through the ANN. In some implementations, the dividing of the input data set into multiple input vectors and subsequent vector-level processing can be implemented using block matrix multiplication techniques.

The neural network weights are a set of values that define the connectivity of the artificial neurons of the ANN, including the relative importance, or weights, of those connections. An ANN can include one or more hidden layers with respective sets of nodes. In the case of an ANN with a single hidden layer, the ANN can be defined by two sets of neural network weights, one set corresponding to the connectivity between input nodes and nodes of the hidden layer, and the other set corresponding to the connectivity between the hidden layer and output nodes. Each set of neural network weights that describes the connectivity corresponds to a matrix to be implemented by the computation module 100. For ANNs with two or more hidden layers, additional sets of neural network weights are needed to define the connectivity between the additional hidden layers. As such, in general, the neural network weights included in the ANN computation request can include multiple sets of neural network weights that represent the connectivity between various layers of the ANN.

As the input dataset to be processed can be divided into multiple smaller digital input vectors for individual processing, the input dataset can be stored in a digital memory. However, the speed of memory operations between a main memory and a processor of the computer 122 can be slower than a rate at which the computing system 120 can perform ANN computations. As such, the rate at which ANN computations can be performed by the computing system 120 may be limited below its full processing rate if an ANN computation by the computing system 120 involves multiple data transfers between the computing system 120 and the computer 122 during the course of processing an ANN computation request. For example, if the computer 122 is to access the input dataset from its own memory and provide the digital input vectors to the controller 124 when requested, the operation of the computing system 120 would likely be greatly slowed down due to the need for a series of data transfer between the computer 122 and the controller 124. It should be noted that a memory access latency of the computer 122 is typically non-deterministic, which further complicates a computation process and degrades the speed at which digital input vectors can be provided to the computing system 120. Further, the processor cycles of the computer 122 may be wasted on managing the data transfer between the computer 122 and the computing system 120.

In some implementations, the computing system 120 stores the entire input dataset in the memory unit 126. The memory unit 126 can be a part of and be dedicated for use by the computing system 120. For example, the memory unit 126 can include high speed SRAM. The dedicated memory unit 126 enables the data transfer between the memory unit 126 and the controller 124 to be tailored for a smooth and uninterrupted flow of data between the memory unit 126 and the controller 124. This enables the ANN computation module 100 to perform matrix multiplications at its full processing rate, without being limited by slower memory operations of a conventional computer such as the computer 122, and allows such uninterrupted flow of data, thereby significantly improving the overall throughput of the computing system 120. Further, because all data needed in performing the ANN computation is provided by the computer 122 to the computing system 120 in a single data transfer, the computing system 120 can perform its ANN computation in a self-contained manner, independent of the computer 122. This self-contained operation of the computing system 120 offloads the computation burden from the computer 122 and removes external dependencies in the operation of the computing system 120, improving the performances of both the computing system 120 and the computer 122.

In some implementations, the memory unit 126 stores pipeline dependent instructions. This speeds up the ANN computations because the compute cores 102 can operate at a higher speed without the need to wait for the instructions to be transmitted from the computer 122 to the controller 124.

In some implementations, the computing system includes compute cores that are located on multiple integrated circuits. The instruction decode and issue module 106 broadcasts the instructions and synchronization control information through the optical broadcast network 104 to the compute cores located on the multiple integrated circuits, allowing the compute cores located on the multiple integrated circuits to be synchronized when collaboratively performing different portions of a computation task.

In some implementations, the computing system includes compute cores that are located on multiple integrated circuits on multiple blades on multiple servers. The instruction decode and issue module 106 broadcasts the instructions and synchronization control information through the optical broadcast network 104 to the compute cores located on the multiple integrated circuits on the multiple blades on the multiple servers, allowing these compute cores to be synchronized when collaboratively performing different portions of a computation task. Advantages of the controlling through the optical broadcast network include low latency and more flexible scale-out capabilities.

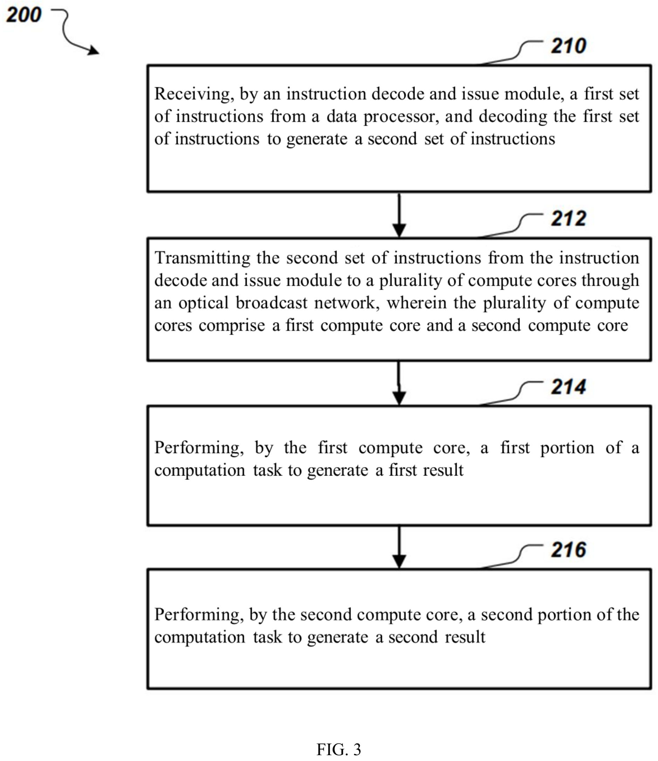

FIG. 3 shows a flow chart of an example of a data processing method provided by some embodiments of the present invention. Operations of a method 200 can be performed by the controller 124. In some implementations, various operations of the method 200 can be run in parallel, in combination, in loops, or in any order.

In operation 210, the method 200 includes receiving a first set of instructions from a data processor, and decoding the first set of instructions to generate a second set of instructions based on the first set of instructions by an instruction decode and issue module.

In operation 212, the method 200 includes transmitting the second set of instructions from the instruction decode and issue module to a plurality of compute cores through an optical broadcast network. The plurality of compute cores include a first compute core and a second compute core. For example, the optical broadcast network includes a plurality of optical links.

In operation 214, the method 200 includes performing a first portion of a computation task by the first compute core to generate a first result.

In operation 216, the method 200 includes performing a second portion of the computation task by the second compute core to generate a second result.

For example, the method 200 can include combining the first result and the second result to generate a final result.

For example, the compute cores can be electrically independent from one another, and the compute cores do not transmit electrical signals to another one of the plurality of compute cores.

For example, the method 200 can include: issuing, by the instruction decode and issue module, a third set of instructions for performing a computation task to at least the first compute core and the second compute core. The method 200 can further include: executing, by at least the first compute core and the second compute core, the third instruction and collaboratively performing the computation task. The executing of the third set of instructions by the at least the first compute core and the second compute core and collaboratively performing the computation task can include: executing the third set of instructions and performing the first portion of the computation task by the first compute core to generate the first result; and executing the third set of instructions and performing a second portion of the computation task by the second compute core to generate the second result.

For example, the method 200 can include broadcasting synchronization control information from the instruction decode and issue module to the first compute core and the second compute core, enabling the first compute core and the second compute core to be synchronized in executing the instructions to perform the first and second portions of the computation task.

For example, the instruction decode and issue module broadcasts synchronization control information to the first compute core and the second compute core through the optical broadcast network to enable the first compute core and the second compute core to be synchronized when respectively performing the first portion and the second portion of the computation task.

For example, the method 200 can include transmitting the second set of instructions from the instruction decode and issue module through the optical broadcast network to at least 4, 8, 16, 32, 64, or 128 compute cores, and using the at least 4, 8, 16, 32, 64, or 128 compute cores to perform the computation task collaboratively.

For example, the method 200 can include using the compute cores to operate collaboratively to solve execution issues of artificial intelligence workloads.

For example, the method 200 can include using the compute cores to operate collaboratively for tensor processing, including using each of the compute cores to operate on a different part of a given tensor.

Computation units (e.g., the computer 122, the compute cores 102, and the instruction decode and issue module 106) and the functional operations described in the embodiments of the present invention can be implemented in digital electronic circuitry, or in computer software, firmware, or hardware, including the structures disclosed in the embodiments of the present invention and their structural equivalents, or in combinations of one or more of them. Embodiments of the subject matter described in the embodiments of the present invention can be implemented using one or more modules of computer program instructions encoded on a computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, such as by delivery of the one or more modules of computer program instructions over a wired or wireless network. The computer-readable medium can be a machine-readable storage device, a machine-readable storage substrate, a memory device, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, or other unit suitable for use in a computing environment. The computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). The computer program can be deployed to be executed on one or more computers that are located at one site or distributed across multiple sites and interconnected by a communication network.

The processes and logic flows described in the embodiments of the present invention can be performed by one or more programmable processors executing one or more computer programs to perform functions by operating on input data and generating output. The processes and logic flows can also be performed by, and apparatus can also be implemented as, special purpose logic circuitry, e.g., a field programmable gate array (FPGA) or an application-specific integrated circuit (ASIC).

The present invention provides a solution for the use of optical signals in optoelectronic computing systems. Through the instruction decode and issue module and the optical broadcast network, the plurality of compute cores can execute instructions synchronously. Furthermore, the plurality of computing cores can be synchronized when executing different parts of the computation task. The technical solutions provided by the present invention not only improve system throughput but also allows for processing of more data, significantly improving the overall computational capacity of the computing system.

Those skilled in the art should understand that the above disclosure is merely some embodiments of the present disclosure, and cannot be used to limit the scope of patent protection claimed by the present disclosure. Equivalent changes made in accordance with the embodiments of the present disclosure shall still fall within the scope covered by the claims of the present disclosure.

## Claims

1. An optoelectronic computing system, comprising:
a plurality of compute cores configured to execute instructions synchronously, wherein the plurality of compute cores comprise a first compute core and a second compute core;
an instruction decode and issue module configured to receive a first set of instructions from a data processor, decode the first set of instructions to generate a second set of instructions, and send the second set of instructions to the plurality of compute cores; and
an optical broadcast network comprising a plurality of optical links that are coupled between the instruction decode and issue module and the plurality of compute cores, wherein the optical links are configured to transmit the second set of instructions from the instruction decode and issue module to each of the plurality of compute cores.

2. The optoelectronic computing system of claim 1, wherein the plurality of compute cores are electrically independent from one another, and each of the plurality of compute cores does not transmit electrical signals to another one of the plurality of compute cores.

3. The optoelectronic computing system of claim 1, wherein the instruction decode and issue module is configured to issue a third set of instructions for performing a computation task to at least two of the plurality of compute cores, the plurality of compute cores are configured to execute the third set of instructions and collaboratively perform the computation task, the first compute core is configured to execute the third set of instructions and performs a first portion of the computation task to generate a first result, and the second compute core is configured to execute the third set of instructions and performs a second portion of the computation task to generate a second result.

4. The optoelectronic computing system of any of claims 2 to 3, wherein the first compute core and the second compute core are synchronized in executing the instructions, and performing the first and second portions of the computation task based on synchronization control information broadcast from the instruction decode and issue module.

5. The optoelectronic computing system of claim 4, wherein the plurality of compute cores comprise at least 4 compute cores.

6. The optoelectronic computing system of claim 1, further comprising a photonic integrated circuit chip, wherein the photonic integrated circuit chip comprises the optical broadcast network.

7. The optoelectronic computing system of claim 1, further comprising a substrate, wherein the plurality of compute cores and the instruction decode and issue module are provided on the substrate, wherein the plurality of optical links comprise optical waveguides that are provided on the substrate and coupled between the instruction decode and issue module and the plurality of compute cores.

8. The optoelectronic computing system of claim 1, further comprising a computation module that employs a single instruction multiple data (SIMD) architecture, wherein the computation module comprises the plurality of compute cores, the instruction decode and issue module, and the optical broadcast network.

9. The optoelectronic computing system of claim 1, wherein the plurality of compute cores are configured to operate collaboratively to solve execution issues of artificial intelligence workloads.

10. The optoelectronic computing system of claim 1, wherein the plurality of compute cores are configured to operate collaboratively for tensor processing, and each of the compute cores is configured to operate on a different part of a given tensor.

11. A method of processing data, comprising:
receiving, by an instruction decode and issue module, a first set of instructions from a data processor, and decoding the first set of instructions to generate a second set of instructions;
transmitting the second set of instructions from the instruction decode and issue module to a plurality of compute cores through an optical broadcast network comprising a plurality of optical links, wherein the plurality of compute cores comprise a first compute core and a second compute core;
performing, by the first compute core, a first portion of a computation task to generate a first result; and
performing, by the second compute core, a second portion of the computation task to generate a second result.

12. The method of claim 11, further comprising combining the first result and the second result to generate a final result.

13. The method of claim 11, wherein the plurality of compute cores are electrically independent from one another, and each of the plurality of compute cores does not transmit electrical signals to another one of the plurality of compute cores.

14. The method of claim 11, further comprising:
issuing, by the instruction decode and issue module, a third set of instructions for performing a computation task to the first compute core and the second compute core;
executing, by the first compute core and the second compute core, the third set of instructions to collaboratively perform the computation task, comprising:
executing, by the first compute core, the third set of instructions and performing the first portion of the computation task to generate the first result, and
executing, by the second compute core, the third set of instructions and performing a second portion of the computation task to generate the second result.

15. The method of claim 11, further comprising broadcasting synchronization control information from the instruction decode and issue module to the first compute core and the second compute core through the optical broadcast network, enabling the first compute core and the second compute core to perform the first and second portions of the computation task synchronously.

16. The method of claim 11, wherein the method further comprises transmitting the second set of instructions from the instruction decode and issue module to at least 4 compute cores through the optical broadcast network, and utilizing the at least 4 compute cores to perform the computation task collaboratively.
